# EUROPEAN PATENT SPECIFICATION

(11) **EP 2 774 754 B1**
(45) Date of publication and mention of the grant of the patent: **12.05.2021**
(21) Application number: 14157415.2
(22) Date of filing: 03.03.2014
(51) Int. Cl.: B32B 18/00

(54) **Ceramic matrix composite component forming method**
Verfahren zur Formung einer Keramikmatrixverbundstoffkomponente
Procédé de formation de composant composite à matrice céramique

(30) Priority: 06.03.2013 GB 201303994
(43) Date of publication of application: 10.09.2014
(73) Proprietor: Rolls-Royce plc, London N1 9FX (GB)
(72) Inventor: Hillier, Steven, Manchester, M24 1HU (GB); Draper, Owen, Nottingham, NG2 5DQ (GB); Razzell, Anthony, Derby, DE72 2BA (GB); Jong, Dennis, 2611 KE Delft (NL)
(74) Representative: Rolls-Royce plc

(56) References cited:
- US-A- 4 936 939
- US-A- 5 682 594

## Description

### Field of the Invention

The present invention relates to a method of forming a ceramic matrix composite component, such as a gas turbine engine component.

### Background of the Invention

The performance of gas turbine engines, whether measured in terms of efficiency or specific output, is improved by increasing the turbine gas temperature. It is therefore desirable to operate the turbines at the highest possible temperatures. For any engine cycle compression ratio or bypass ratio, increasing the turbine entry gas temperature produces more specific thrust (e.g. engine thrust per unit of air mass flow). However, as turbine entry temperatures increase, it is necessary to develop components and materials better able to withstand the increased temperatures.

This has led, for example, to the replacement of metallic shroud segments with ceramic matrix composite shroud segments having higher temperature capabilities. To accommodate the change in material, however, adaptations to the segments have been proposed. For example, EP 0751104 discloses a ceramic segment having an aluminium phosphate-based abradable seal coating which is suitable for use with nickel base turbine blades, and EP 1965030 discloses a hollow section ceramic seal segment.

Whereas metallic materials allow operational temperatures up to 1150°C, some ceramic matrix composites are able to operate up to 1350°C. However, current turbine temperatures are around 1300-1400°C and an aim is to increase these further. Accordingly, even ceramic matrix composites may need thermal protection. One option is to apply a thermal barrier coating to the composite based, for example, on the type of coating system described in EP 0751104.

Such coatings can be cast onto the ceramic matrix composite component. However, during drying and firing shrinkage may occur causing strain at the interfacial joint between materials, weakening the bond/mechanical strength/capability. Also the firing temperature of the coating must generally be lower than that of the composite to prevent a loss of properties in the composite, which limits the options for structuring the coating or can lead to undesirable further sintering of the coating in the engine. Such uncontrolled sintering may result in reactions with or inclusion of undesirable elements. Alternatively, the coating can be sintered and then adhered to the component using ceramic cement, but this can result in a relatively weak interfacial bond.

US4936939A and US5682594A disclose methods for producing ceramic matrix composites.

### Summary of the Invention

It would be desirable to provide an alternative method for coating a ceramic matrix composite component.

Accordingly, in a first aspect, the present invention provides a method of forming a ceramic matrix composite component, according to claim 1.

Advantageously, forming the ceramic layer (which may serve as a thermal barrier or abradable coating) before the ceramic matrix composite body, allows the layer to be fired at a higher temperature than the forming temperature of the composite body and can help to prevent undesirable further sintering of the layer in use (e.g. in an engine).

Optional features of the invention will now be set out. Unless indicated otherwise, these are applicable singly or in any combination with any aspect of the invention.

The step of forming the ceramic matrix composite body may be performed by: forming a green ceramic matrix composite body on a surface of the ceramic layer; and sintering the green body to produce a ceramic matrix composite component with the ceramic layer attached thereto. During the sintering, pressure may be applied to force the ceramic layer and the green body together. The sintering may be performed in a vacuum or reduced pressure. The forming of the green body may include the sub-steps of: stacking successive plys of continuous fibre reinforcement on the surface of the ceramic layer, each stacked ply being covered in a slurry containing binder and ceramic; and processing (e.g. pressing and/or heating) the stacked and slurry-covered plys such that the stacked plys are embedded in a green ceramic matrix. The sintering of the green body then fuses the green ceramic matrix.

However, other techniques for forming the ceramic matrix composite body include, for example, chemical vapour infiltration or melt infiltration of a ceramic matrix material into a lay-up of ceramic reinforcement fibres situated on the surface of the ceramic layer.

The method may include a further step of removing the pattern element from the ceramic layer. For example, the removing step may be performed between the drying step and the forming step. However, the removing step may be performed as a final step, after the ceramic matrix composite component is produced with the ceramic layer attached thereto. The method may include a step of sintering the ceramic layer, e.g. before the forming step. If the pattern element is removed between the drying step and the forming step, then the separate sintering step may be performed after the removal.

The ceramic matrix composite component with the attached ceramic layer may be subsequently processed, e.g. by machining. For example, attachment formations and/or an improved surface finish can be provided.

The surface of the ceramic layer may be processed, e.g. by machining, before the ceramic matrix composite body is formed thereon. For example, it may be roughened or otherwise configured by mechanical keying and/or increased surface area to improve the bond strength to the body. Additionally or alternatively such surface features may be moulded in as part of the coating step.

The pattern element may be sacrificial. For example it may be a wax element. Wax pattern elements are conventionally used in investment casting procedures, for example for the production of turbine blades. They are highly flexible in terms of the final shapes that can be produced based on such pattern elements. Removal or "dewaxing" of the pattern element is also then straightforward to perform.

The slurry may be de-gassed before the coating step. This can reduce the amount of incumbent or entrapped air which can reduce bond strengths and structural properties.

The coating step can include building up successive layers of ceramic slurry on the pattern element. For example, the ceramic slurry may include silicate, alumina, mullite and/or zirconia. Each layer of the slurry may be modified to suit its requirements, e.g. by changing the shape, size or phase of the slurry particles or by incorporating particulates as discussed below.

The coating step can include incorporating particulates in the slurry, and thereby in the ceramic layer. For example, the particulates may be ceramic hollow particles, ceramic solid particles, ceramic whiskers, ceramic discontinuous fibres and/or ceramic platelets. The particulates can be pre-mixed in the slurry and applied to the pattern element therewith. Another option is for, the coating step to include building up successive and alternate layers of slurry and particulate.

The particulates can be incorporated at specific locations, for example at the surface of the ceramic layer on which the green ceramic matrix composite body is formed. By incorporating particulates at this surface, features can be introduced to key the layer to the composite body. Particles, e.g. providing enhanced abradability, may be provided at the opposite surface of the ceramic layer (i.e. adjacent the pattern element).

The coating step can include embedding hollow or sacrificial members in the ceramic slurry and/or locating hollow or sacrificial members at the surface of the ceramic slurry, the hollow or sacrificial members forming cooling channels in the ceramic layer and/or at the surface on which the ceramic matrix composite body is formed. For example, sacrificial members can be formed of wax or polymer and can be burnt or melted out during sintering to form the cooling channels. The channels may typically have a diameter in the range from 0.05 to 1 mm. In use, cooling air can flow through the channels to cool the component.

The method may include the further step of applying a ceramic cement to the surface of the ceramic layer before the step of forming the ceramic matrix composite body on the surface. The component may be a gas turbine engine component. For example, the component may be a combustion tile, a seal segment for a shroud ring of a rotor, a flame holder, a jet pipe liner, a nozzle petal, a nozzle guide vane or a turbine blade. If the forming step is performed by forming a green ceramic matrix composite body and then sintering the green body, the sintering of the green body can be performed in situ in the engine.

Further optional features of the invention are set out below.

### Brief Description of the Drawings

Embodiments of the invention will now be described by way of example with reference to the accompanying drawings in which:
Figure 1 shows a longitudinal sectional elevation through a ducted fan gas turbine engine;
Figure 2 shows schematically a sectional elevation through a portion of the high pressure turbine of the engine of Figure 1; and
Figure 3 shows schematically a perspective view of a seal segment.

### Detailed Description and Further Optional Features of the Invention

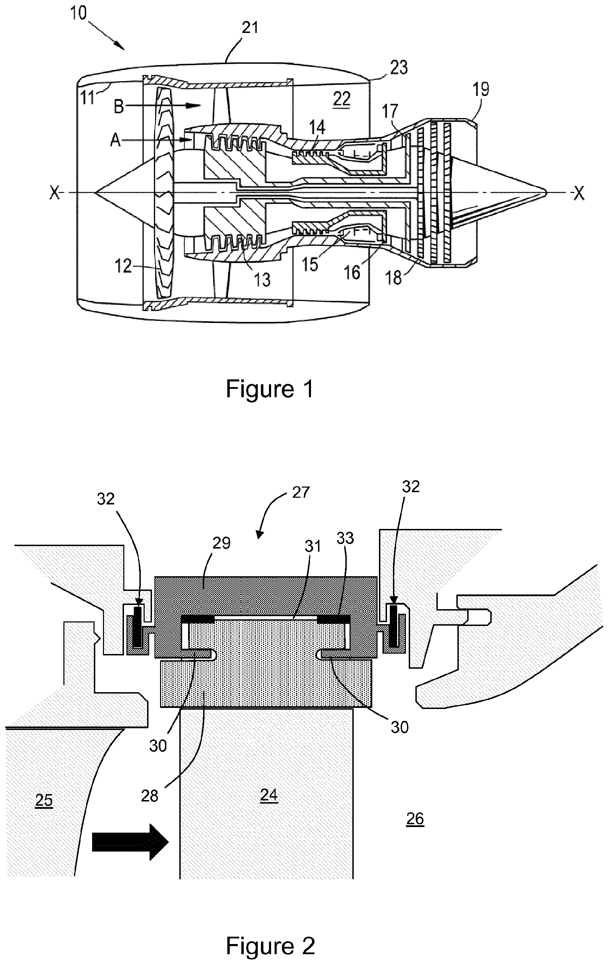

With reference to Figure 1, a ducted fan gas turbine engine generally indicated at 10 has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

The high pressure turbine 16 includes an annular array of radially extending rotor aerofoil blades 24, the radially outer part of one of which can be seen if reference is now made to Figure 2, which shows schematically a sectional elevation through a portion of the high pressure turbine. Hot turbine gases flow over nozzle guide vanes 25 and the aerofoil blades 24 in the direction generally indicated by the arrow. A shroud ring 27 in accordance with the present invention is positioned radially outwardly of the shroudless aerofoil blades 24. The shroud ring 27 serves to define the radially outer extent of a short length of the gas passage 26 through the high pressure turbine 16.

The turbine gases flowing over the radially inward facing surface of the shroud ring 27 are at extremely high temperatures. Consequently, at least that portion of the ring 27 must be constructed from a material which is capable of withstanding those temperatures whilst maintaining its structural integrity. Ceramic materials are particularly well suited to this sort of application.

The shroud ring 27 is formed from an annular array of seal segments 28 attached to a part of the engine casing which takes the form of an annular, metallic backing plate 29 having a central portion and radially inwardly projecting, front and rear flanges, with inwardly directed hooks 30 formed at the ends of the flanges. Cooling air for the ring 27 enters a space 31 formed between the backing plate 29, each segment 28 and a gasket-type sealing ring 33 located between the plate 29 and the segment 28, the air being continuously replenished as it leaks, under a pressure gradient, into the working gas annulus through suitable holes (not shown) in the backing plate 29. The backing plate 29 is sealed at its front and rear sides to adjacent parts of the engine casing by piston ring-type sealing formations 32 of conventional design.

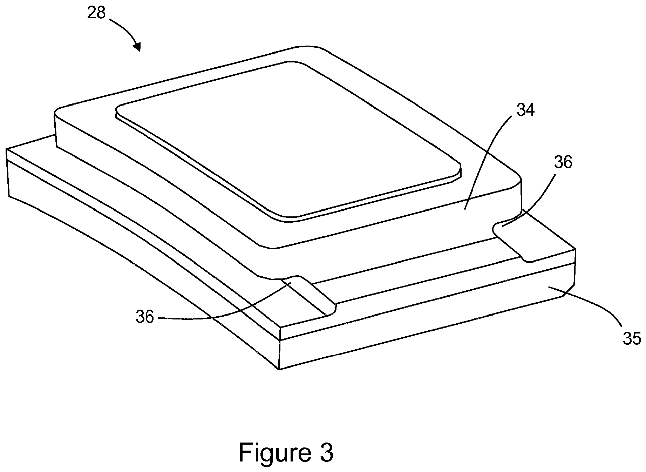

Figure 3 shows schematically a perspective view of one of the seal segments 28. The segment 28 has a lightly curved, plate-like, rectangular shape. A radially outer, body portion 34 of the segment 28 is formed from continuous fibre reinforced ceramic matrix composite, as discussed in more detail below. A thermal barrier coating 35 is formed on the radially inward facing surface of the body portion 34. The gasket-type sealing ring 33 (not shown in Figure 3) runs around the edges of the radially outer surface of the body portion 34.

Respective birdmouth slots 36 extend in the circumferential direction along the front and rear sides of the body portion 34. To mount the seal segment 28 to the backing plate 29, the plate is split into two or more arc sections allowing the segments to be loaded thereon by circumferential sliding. The arc sections are then joined together to form the backing plate.

To produce the seal segment 28, a sacrificial wax pattern is produced having a pattern surface that corresponds to the shape of the gas-washed surface of the seal segment. The pattern is dipped or otherwise coated in a ceramic slurry containing e.g. silicate, alumina, mullite and/or zirconia and allowed to dry. The dipping and drying process is continued until a desired thickness of slurry is built up. The slurry is preferably de-gassed prior to dipping. During the build-up, additional particulate media can be added to the layer, such as hollow or solid ceramic particles, ceramic whiskers, ceramic discontinuous fibres and/or ceramic platelets. Hollow members can also be embedded in the slurry and/or located at the surface of the slurry to act as cooling channels in the seal segment. Similarly, sacrificial wax or polymer members can be embedded in the slurry and/or located at this surface, and can subsequently be burnt or melted out to form the cooling channels. The procedure is thus similar to that used in investment casting to produce a ceramic mould.

Dewaxing is then performed by heating the coated pattern, which allows the wax to melt away and/or vaporise, to leave a self-supporting ceramic layer corresponding to the coating 35 that is fired to remove all liquid components and sinter the ceramic in the slurry. Alternatively, the firing can be postponed to be performed simultaneously with the firing that produces the ceramic matrix composite body portion 34 of the seal segment 28.

The optional particulate media added to the ceramic layer can be used to: enhance the keying of the coating 35 to the body portion 34, tailor the coefficient of thermal expansion of the coating, control the abradability of the coating etc.

A green ceramic matrix composite body is formed on a surface of the ceramic layer (typically the surface that has not been in contact with the wax pattern). To enhance bonding, a ceramic cement may be applied to the surface before the green body is formed thereon. More particularly, the green body can be produced by stacking successive plys formed from a cloth of woven continuous fibre reinforcement. Each ply is covered in a water-based slurry containing a binder and ceramic. The slurry can be applied after each ply is stacked, or the slurry can be pre-impregnated into the plys before stacking. The reinforcement fibres can be bunched together to form a tow, and for each ply the tows woven in to a cloth (or sheet). The stacked plys are pressed to remove excess slurry, and heated which allows the binder to produce the green body.

The green body with the ceramic layer is then fired in a furnace (or alternatively fired directly in an engine environment) to drive off residual moisture and sinter the ceramic particles to form the surrounding matrix of the ceramic matrix composite body portion 34 (and also to fire the ceramic layer if that has not already been done). For example, the green body may be heated initially slowly to 100°C to drive off residual moisture then ramped up to over 1100°C to sinter the solids in the matrix. Tooling may be removed after the initial slow heating and before the sintering. Varying the pressure and temperature of the processing can give different levels of densification and therefore can vary the resultant mechanical properties of the component. The sintering may be performed in a vacuum or reduced pressure. The matrix is also bonded to the fibres and contains a distribution of micro-cracks which open and close as the component is loaded. The material is generally notch insensitive, unlike a monolithic ceramic. The temperature capability of such a composite may be conservatively 1150°C for continuous use, but can be taken over 1200°C for short excursions.

Features such as the birdmouth slots 36 can be produced by subsequent machining.

By way of example, the reinforcement fibres can be Nextel720™ and/or Nextel610™ alumina silicate fibres available from 3M or similar, the ceramic particles can be alumina particles or a mixture of alumina and silicate particles. These are examples of Ox/Ox ceramic matrix composite materials, which are suitable for green body and sintering procedure discussed above. Another option, however, is to form the ceramic matrix composite body from a SiC/SiC ceramic matrix composite material, having a silicon carbide based matrix and silicon carbide based reinforcement fibres. A SiC/SiC composite body can be manufactured by CVI (chemical vapour infiltration) and/or MI (melt infiltration) of SiC matrix material into a lay-up of SiC reinforcement fibres situated on a surface of the ceramic layer.

Advantageously, the shape capability of this process is only limited by the capability to shape the pattern. Thus, although described above in relation to a seal segment, other components that can potentially be made in the same fashion include: combustion tiles, flameholders, jet pipe liners, nozzle petals, nozzle guide vanes and turbine blades. Further, although wax is generally a convenient choice for the material of the pattern, other materials may be used. For example, rather than having a sacrificial pattern that burns or melts off, a reusable pattern may be used, e.g. formed of steel, aluminium, plastic or wood. A release agent may be used in conjunction with a reusable pattern. Additionally or alternatively, the pattern may remain attached to the ceramic layer during formation of the ceramic matrix composite body. In this case, however, the pattern should preferably have a coefficient of thermal expansion that is matched to that of the coating, particularly if elevated temperatures are used to dry the slurry.

A further advantage of the process is that the ceramic layer is fired at a higher temperature than the ceramic matrix composite. Conventionally, as described in EP 0751104, the layer would be cast onto the ceramic matrix composite so that the coating is fired at a lower temperature, or the coating would be formed separately and then cemented to the ceramic matrix composite which can result in a weak interfacial bond.

## Claims

1. A method of forming a ceramic matrix composite component, the method including the steps of:
providing a pattern element for the ceramic coating;
coating the pattern element with a ceramic coating slurry;
drying the slurry to form a ceramic coating layer;
sintering the ceramic coating layer at a first temperature;
forming a ceramic matrix composite body on a surface of the sintered ceramic coating layer and sintering the ceramic matrix composite body on the surface of the sintered ceramic coating layer at a second temperature to produce a ceramic matrix composite component with the ceramic coating layer attached thereto wherein the second temperature is lower than the first temperature.

2. A method according to claim 1, wherein the step of forming the ceramic matrix composite body is performed by: forming a green ceramic matrix composite body on a surface of the ceramic coating layer; and sintering the green body to produce a ceramic matrix composite component with the ceramic coating layer attached thereto.

3. A method according to claim 2, wherein the forming of the green ceramic matrix composite body includes the sub-steps of:
stacking successive plys of continuous fibre reinforcement on the surface of the ceramic coating layer, each stacked ply being covered in a slurry containing binder and ceramic; and
processing the stacked and slurry-covered plys such that the stacked plys are embedded in a green ceramic matrix.

4. A method according to any one of the previous claims, including a further step of removing the pattern element from the ceramic coating layer.

5. A method according to any one of the previous claims, wherein the pattern element is a sacrificial pattern element.

6. A method according to any one of the previous claims, wherein the coating step includes building up successive layers of ceramic coating slurry on the pattern element.

7. A method according to any one of the previous claims, wherein the coating step includes incorporating particulates in the slurry, and thereby in the ceramic coating layer and wherein the particulates serve to enhance the keying of the ceramic layer to the ceramic matrix composite body in the ceramic matrix composite component.

8. A method according to any one of the previous claims, wherein the coating step includes embedding hollow or sacrificial members in the ceramic coating slurry and/or locating hollow or sacrificial members at the surface of the ceramic coating slurry, the hollow members or sacrificial forming cooling channels in the ceramic coating layer and/or at the surface on which the ceramic matrix composite body is formed.

9. A method according to any one of the previous claims, including a further step of applying a ceramic cement to the surface of the ceramic coating layer before the step of forming the ceramic matrix composite body thereon.

10. A method according to any one of the previous claims, wherein the component is a gas turbine engine component.

11. A method according to claim 1 0 as dependent on claim 2, wherein the sintering of the green body is performed in situ in the engine.

## Patentansprüche

1. Verfahren zum Bilden einer Keramikmatrix-Verbundwerkstoffkomponente, wobei das Verfahren die folgenden Schritte umfasst:
Bereitstellen eines Musterelements für den Keramiküberzug;
Überziehen des Musterelements mit einem Keramiküberzugsschlamm;
Trocknen des Schlamms, um eine Keramiküberzugsschicht zu bilden;
Sintern der Keramiküberzugsschicht auf einer ersten Temperatur;
Bilden eines Keramikmatrix-Verbundwerkstoffkörpers auf einer Oberfläche der gesinterten Keramiküberzugsschicht und Sintern des Keramikmatrix-Verbundwerkstoffkörpers auf der Oberfläche der gesinterten Keramiküberzugsschicht auf einer zweiten Temperatur, um eine Keramikmatrix-Verbundwerkstoffkomponente mit daran angebrachter Keramiküberzugsschicht zu bilden, wobei die zweite Temperatur niedriger ist als die erste Temperatur.

2. Verfahren nach Anspruch 1, wobei der Schritt des Bildens des Keramikmatrix-Verbundwerkstoffkörpers durchgeführt wird durch: Bilden eines Keramikmatrix-Verbundwerkstoffrohkörpers auf einer Oberfläche der Keramiküberzugsschicht; und Sintern des Rohkörpers, um eine Keramikmatrix-Verbundwerkstoffkomponente mit daran angebrachter Keramiküberzugsschicht zu bilden.

3. Verfahren nach Anspruch 2, wobei das Bilden des Keramikmatrix-Verbundwerkstoffrohkörpers die folgenden Teilschritte umfasst:
Stapeln aufeinanderfolgender Lagen Endlosfaserverstärkung auf der Oberfläche der Keramiküberzugsschicht, wobei jede gestapelte Lage in einem schlammhaltigen Bindemittel und Keramik bedeckt ist; und
Verarbeiten der gestapelten und mit Schlamm bedeckten Lagen, so dass die gestapelten Lagen in einer Rohkeramikmatrix eingebettet sind.

4. Verfahren nach einem der vorstehenden Ansprüche, das ferner einen Schritt des Entfernens des Musterelements von der Keramiküberzugsschicht umfasst.

5. Verfahren nach einem der vorstehenden Ansprüche, wobei das Musterelement ein Opfermusterelement ist.

6. Verfahren nach einem der vorstehenden Ansprüche, wobei der Schritt des Überziehens das Aufbauen aufeinanderfolgender Schichten Keramiküberzugsschlamm auf dem Musterelement umfasst.

7. Verfahren nach einem der vorstehenden Ansprüche, wobei der Schritt des Überziehens das Inkorporieren von Teilchen in den Schlamm und dadurch in die Keramiküberzugsschicht umfasst, und wobei die Teilchen dazu dienen, die Haftverbindung der Keramikschicht mit dem Keramikmatrix-Verbundstoffkörper in der Keramikmatrix-Verbundwerkstoffkomponente zu fördern.

8. Verfahren nach einem der vorstehenden Ansprüche, wobei der Schritt des Überziehens das Einbetten hohler oder Opferelemente in den Keramiküberzugsschlamm umfasst und/oder das Anordnen hohler oder Opferelemente an der Oberfläche des Keramiküberzugsschlamms, wobei die hohlen oder Opferelemente Kühlkanäle in der Keramiküberzugsschicht und/oder auf der Oberfläche bilden, auf welcher der Keramikmatrix-Verbundstoffkörper gebildet ist.

9. Verfahren nach einem der vorstehenden Ansprüche, das einen weiteren Schritt des Applizierens eines Keramik-Zements auf der Oberfläche der Keramiküberzugsschicht vor dem Schritt des Bildens des Keramikmatrix-Verbundstoffkörpers darauf umfasst.

10. Verfahren nach einem der vorstehenden Ansprüche, wobei die Komponente eine Komponente eines Gasturbinentriebwerks ist.

11. Verfahren nach Anspruch 10 in Abhängigkeit von Anspruch 2, wobei das Sintern des Rohkörpers in situ in dem Triebwerk durchgeführt wird.

## Revendications

1. Procédé de formation de composant composite à matrice céramique, le procédé comprenant les étapes consistant à :
fournir un élément de motif pour le revêtement céramique ;
recouvrir l'élément de motif avec une suspension de revêtement céramique ;
sécher la suspension pour former une couche de revêtement céramique ;
fritter la couche de revêtement céramique à une première température ;
former un corps composite à matrice céramique sur une surface de la couche de revêtement céramique frittée et fritter le corps composite à matrice céramique sur la surface de la couche de revêtement céramique frittée à une seconde température pour produire un composant composite à matrice céramique auquel est fixée la couche de revêtement céramique, la seconde température étant inférieure à la première température.

2. Procédé selon la revendication 1, l'étape de formation du corps composite à matrice céramique étant réalisée par : la formation d'un corps composite à matrice céramique cru sur une surface de la couche de revêtement céramique ; et le frittage du corps cru pour produire un composant composite à matrice céramique auquel est fixée la couche de revêtement céramique.

3. Procédé selon la revendication 2, la formation du corps composite à matrice céramique cru comprenant les sous-étapes consistant à :
empiler des couches successives de renforcement à fibres continues sur la surface de la couche de revêtement céramique, chaque couche empilée étant recouverte d'une suspension contenant un liant et de la céramique ; et
traiter les couches empilées et recouvertes de suspension de sorte à ce que les couches empilées soient incorporées dans une matrice céramique crue.

4. Procédé selon l'une quelconque des revendications précédentes, comprenant une étape supplémentaire consistant à retirer l'élément de motif de la couche de revêtement céramique.

5. Procédé selon l'une quelconque des revendications précédentes, l'élément de motif étant un élément de motif sacrificiel.

6. Procédé selon l'une quelconque des revendications précédentes, l'étape de revêtement comprenant l'étape consistant à accumuler des couches successives de suspension de revêtement céramique sur l'élément de motif.

7. Procédé selon l'une quelconque des revendications précédentes, l'étape de revêtement comprenant l'étape consistant à incorporer des particules dans la suspension, et ainsi dans la couche de revêtement céramique, et les particules servant à améliorer le clavetage de la couche céramique sur le corps composite à matrice céramique dans le composant composite à matrice céramique.

8. Procédé selon l'une quelconque des revendications précédentes, l'étape de revêtement comprenant l'étape consistant à incorporer des éléments creux ou sacrificiels dans la suspension de revêtement céramique et/ou à placer des éléments creux ou sacrificiels à la surface de la suspension de revêtement céramique, les éléments creux ou sacrificiels formant des canaux de refroidissement dans la couche de revêtement céramique et/ou à la surface sur laquelle le corps composite à matrice céramique est formé.

9. Procédé selon l'une quelconque des revendications précédentes, comprenant une étape supplémentaire consistant à appliquer un ciment céramique sur la surface de la couche de revêtement céramique avant l'étape de formation du corps composite à matrice céramique sur celle-ci.

10. Procédé selon l'une quelconque des revendications précédentes, le composant étant un composant de moteur de turbine à gaz.

11. Procédé selon la revendication 10 telle que dépendant de la revendication 2, le frittage du corps cru étant réalisé in situ dans le moteur.
